(19) Europäisches Patentamt
European Patent Office
Office européen des brevets

(11) **EP 2 444 953 B1**

(12) **FASCICULE DE BREVET EUROPEEN**

(45) Date de publication et mention de la délivrance du brevet:
**17.05.2017 Bulletin 2017/20**

(51) Int Cl.:
*G09G 3/20* *(2006.01)*    *G06T 11/60* *(2006.01)*

(21) Numéro de dépôt: **11186212.4**

(22) Date de dépôt: **21.10.2011**

(54) **Dispositif d'affichage matriciel de deux images fusionnées**

Matrix-Anzeigevorrichtung für zwei verschmolzene Bilder

Device for bitmap display of two merged images

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2010 FR 1058684**

(43) Date de publication de la demande:
**25.04.2012 Bulletin 2012/17**

(73) Titulaire: **Microoled**
**38000 Grenoble Cedex 9 (FR)**

(72) Inventeurs:
• **Haas, Gunther**
**38120 Saint-Egreve (FR)**

• **Espuno, Laurent**
**38120 Le Fontanil (FR)**

(74) Mandataire: **Collet, Alain et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 1 742 490       US-A- 6 034 481**
**US-A- 6 151 030        US-A1- 2006 284 872**
**US-A1- 2007 146 242    US-A1- 2010 110 094**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 444 953 B1

**Description**

La présente invention concerne un dispositif d'affichage matriciel de deux images fusionnées. Elle s'applique plus particulièrement à l'affichage simultané de deux images dont les définitions peuvent différer.

Certaines applications impliquant l'affichage d'images, nécessitent un besoin pour une fusion d'images, c'est-à-dire un affichage simultané de deux images provenant de deux sources différentes. Les deux sources peuvent notamment provenir de deux capteurs d'images de natures hétérogènes, visant à restituer des informations de natures différentes sur une même scène. Par exemple, il peut s'avérer nécessaire de permettre l'affichage d'une première image, par exemple en niveaux de gris et en haute définition, produite par un premier capteur de haute définition, simultanément à une seconde image, de définition moindre, et typiquement monochrome ou bicolore, par exemple produite par un second capteur. Ces deux images peuvent par exemple correspondre respectivement à une première image restituée par un capteur de vision nocturne et une seconde image restituée par un capteur infrarouge ; ou encore à une première image restituée par une radiographie par rayons X, et une seconde image réalisée par imagerie par résonance magnétique. Dans les deux cas précités, les images représentent une même scène. Egalement, la première image peut représenter une scène restituée par un capteur à haute définition, et la seconde image peut représenter des symboles, du texte ou encore des menus devant être affichés simultanément à la première image.

La présente invention concerne les applications précitées à titre d'exemples non limitatifs, et peut également s'appliquer à d'autres exemples. Plus particulièrement, la présente invention concerne la fusion d'images pour un affichage via un dispositif d'affichage matriciel. Un dispositif d'affichage matriciel est essentiellement formé par une matrice de pixels, associée à un système d'adressage ; des systèmes à matrice active et à matrice passive sont connus de l'état de la technique. Les pixels peuvent par exemple être formés par des cristaux liquides, communément désignés suivant le sigle LCD correspondant à la terminologie "Liquid Crystal Display", ou encore par des diodes électroluminescentes ou LEDs, ou encore par des diodes électroluminescentes organiques, communément désignées suivant l'acronyme OLED correspondant à la terminologie anglaise "Organic Light Emitting Diodes". La matrice de pixels est usuellement associée à un contrôleur, mettant en forme le signal vidéo et générant les signaux de contrôle destinés à la matrice. Pour la suite, il pourra être considéré dans un souci de simplification qu'un signal de contrôle se limite à un signal d'intensité lumineuse, pouvant être assimilé à une valeur quantifiée et normalisée, pouvant par exemple être une valeur de tension à appliquer à un élément électroluminescent, ou une valeur numérique, par exemple codée sur 8 bits et ainsi comprise entre 0 et 255, destinée à une matrice ou à un pixel numérique. Il pourra par exemple être entendu que les signaux appliqués sont des signaux de luminance, dont les grandeurs varient d'une valeur nulle correspondant à un niveau de noir, jusqu'à une valeur maximale. La formation d'une image sur un dispositif d'affichage, par l'application de signaux appropriés aux pixels, peut être désignée suivant le terme mappage, ou plus communément suivant le terme anglais correspondant "mapping". Le contrôleur peut par exemple être mis en oeuvre dans un circuit électronique intégré de type ASIC, selon l'acronyme correspondant à la terminologie anglaise : "Application Specific Integrated Circuit". Le contrôleur peut également par exemple être mis en oeuvre via un microcontrôleur programmable. Le contrôleur peut également par exemple être mis en oeuvre via un composant programmable de type FPGA selon le sigle correspondant à la terminologie anglaise "Field-Programmable Gate Array", de type EPLD selon le sigle désignant la terminologie anglaise "Erasable Programmable Logic Device", ou d'autres types de composants programmables connus.

Les dispositifs connus de l'état de la technique permettant l'affichage d'images fusionnées telles que dans les exemples décrits ci-dessus, procèdent habituellement à un affichage sur un écran polychrome, typiquement de type communément désigné par le sigle RGB par référence aux trois couleurs Rouge Vert Bleu formant par combinaison l'ensemble des couleurs visibles, d'une image fusionnée générée par un calculateur, mis en oeuvre dans un circuit logique dédié, ou bien via un logiciel exécuté sur un calculateur de forte puissance. Les algorithmes de fusion peuvent être relativement complexes, et la définition de l'image fusionnée s'avère significativement dégradée, celle-ci étant affichée sur un écran polychrome, et étant essentiellement composée de la première image monochrome. En effet, les matrices d'affichage polychrome sont habituellement constituées d'une pluralité de groupes de pixels ou "sous-pixels", un sous-pixel étant dédié à l'affichage d'une couleur fondamentale, par exemple en étant associé à un filtre de couleur, ou bien en étant formé par un élément luminescent apte à produire des signaux lumineux de différentes couleurs. D'une manière typique, un groupe peut être constitué de trois sous-pixels : chacun des pixels étant associé à un filtre d'une couleur fondamentale, le groupe permettant alors l'affichage de la couleur souhaitée dans une palette de couleurs, par combinaison des signaux de commande des sous-pixels. Il est par exemple habituel de recourir à des arrangements de sous-pixels respectivement associés à des filtres de couleurs rouge, verte et bleue.

Le document US 2007/146242 divulgue un dispositif d'affichage matriciel bi-chromatique comprenant une matrice de pixels, ainsi que son utilisation pour afficher des images monochromatiques utilisant des pixels d'une première couleur, et pour mettre en évidence certain parties de ces images grâce à l'utilisation de pixels d'une deuxième couleur.

Le document US 2006/284872 divulgue un dispositif d'affichage bi-chromatique présentant des pixels constitués de sous-pixels de deux couleurs primaires saturées. Le dispositif peut être utilisé pour afficher une première image portée par un canal de chrominance superposée à une seconde image portée par un canal de luminance.

Un but de la présente invention est de pallier au moins les inconvénients précités, en proposant un dispositif d'affichage matriciel de deux images fusionnées, préservant au mieux la définition de l'image dont celle-ci est la plus élevée.

Un avantage de l'invention est qu'elle permet la mise en oeuvre d'algorithmes dont la mise en oeuvre est facilitée, et peut par exemple être réalisée par le contrôleur de l'afficheur matriciel.

A cet effet, l'invention a pour objet un système selon la revendication 1 ou la revendication 2, comprenant une première et une seconde source d'images ainsi qu'un dispositif d'affichage matriciel. Diverses modes de réalisation particuliers d'un tel système constituent l'objet des revendications dépendantes.

D'autres caractéristiques et avantages de l'invention apparaîtront à la lecture de la description, donnée à titre d'exemple, faite en regard des dessins annexés qui représentent :

- la figure 1, un schéma présentant de manière synoptique le principe général d'un dispositif d'affichage matriciel, dans un exemple de réalisation de l'invention ;
- la figure 2, un schéma présentant de manière synoptique l'affichage réalisé sur un arrangement de pixels, dans un premier exemple de réalisation de l'invention ;
- la figure 3, un schéma présentant de manière synoptique l'affichage réalisé sur un arrangement de pixels, dans un deuxième exemple de réalisation de l'invention ;
- la figure 4, un schéma présentant un exemple de réalisation d'un dispositif d'affichage matriciel selon un mode de réalisation de l'invention.

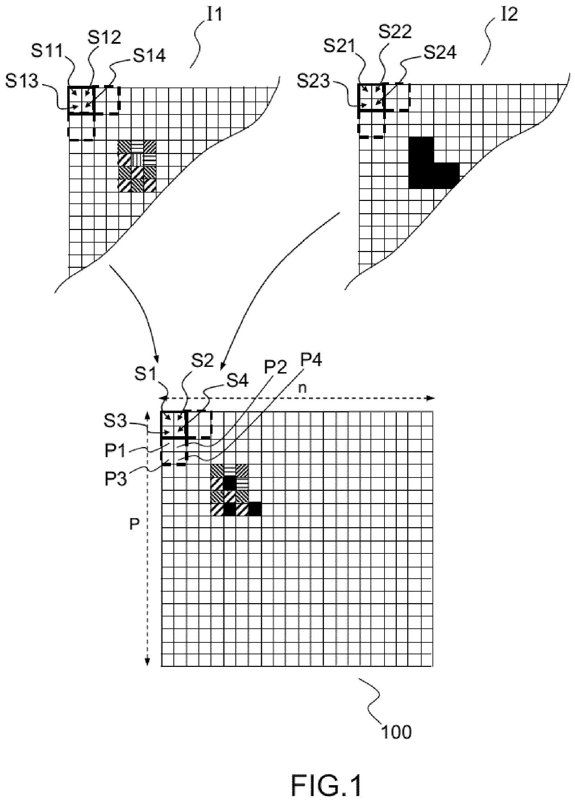

La figure 1 présente un schéma illustrant de manière synoptique le principe général d'un dispositif d'affichage matriciel selon un exemple de réalisation de la présente invention.

Une première image I1 est illustrée partiellement dans la figure, la première image I1 ayant au préalable été si besoin redimensionnée de manière à offrir une définition identique à la définition de la matrice de pixels d'un dispositif d'affichage 100. Dans l'exemple illustré par la figure, la matrice de pixels du dispositif d'affichage 100 est rectangulaire, à n colonnes et p lignes de pixels. La présente invention peut également s'appliquer à des matrices de formes différentes. Le dispositif d'affichage 100 peut par exemple être un afficheur de type OLED, ou LED, ou LCD, ou de tout autre type connu, associé à un contrôleur non représenté sur la figure.

De la même manière, une seconde image I2 est illustrée partiellement dans la figure, celle-ci ayant également été si besoin redimensionnée de manière à offrir une définition identique à celle de la matrice de pixels du dispositif d'affichage 100, ou bien à une définition correspondant à une sous définition de celle de la matrice de pixels du dispositif d'affichage 100, par exemple un quart de cette dernière.

Le redimensionnement, parfois désigné suivant le terme anglais "upscaling" si la définition native de l'image est moindre que la définition de l'afficheur, ou bien suivant le terme "downscaling" dans le cas opposé, peut par exemple être réalisé par un microcontrôleur non représenté sur la figure, selon des méthodes en elles-mêmes connues de l'état de la technique, et non explicitées dans la présente description.

Selon une spécificité de la présente invention, une mosaïque peut être considérée, cette mosaïque couvrant la totalité des pixels des deux images I1, I2 et de la matrice du dispositif d'affichage 100, et étant formée d'une pluralité d'arrangements identiques de pixels. Dans l'exemple illustré par la figure et les figures suivantes, un arrangement de forme carrée de quatre pixels P1, P2, P3, P4 est considéré. La présente invention peut bien sûr s'appliquer avec des arrangements d'une pluralité de pixels dont le nombre peut différer de quatre, la forme des arrangements n'étant pas nécessairement carrée ou rectangulaire, dès lors que l'ensemble des arrangements puisse couvrir la totalité des pixels considérés.

L'image fusionnée résultant des deux images I1, I2 peut être formée via des signaux d'intensité lumineuse appropriés. Ainsi, les signaux d'intensité lumineuse permettant la formation des pixels P1, P2, P3, P4 d'un arrangement de pixels de l'image fusionnée peuvent être notés respectivement S1, S2, S3, S4. Les signaux d'intensité lumineuse permettant la formation des quatre pixels correspondants de l'arrangement de la première image I1 seule peuvent être notés S11, S12, S13, S14, et d'une manière similaire les signaux d'intensité lumineuse permettant la formation des quatre pixels y correspondant de l'arrangement de la seconde image I2 peuvent être notés S21, S22, S23, S24.

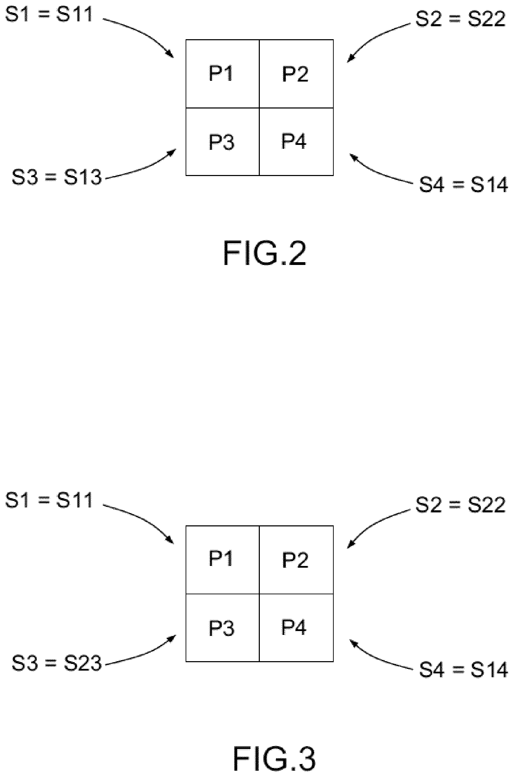

La présente invention propose que chaque pixel P1, P2, P3, P4 d'un arrangement de pixels de l'image fusionnée soit formé soit via un signal d'intensité lumineuse S11, S12, S13, S14 permettant la formation de la première image I1, soit via un signal d'intensité lumineuse S21, S22, S23, S24 permettant la formation de la seconde image I2, soit via un signal d'intensité lumineuse résultant d'une combinaison des signaux précités S11, S12, S13, S14 et S21, S22, S23, S24 permettant respectivement la formation de la première image I1 et de la seconde image I2. Ainsi, un premier nombre de pixels d'un arrangement peut recevoir les signaux d'intensité lumineuse associés aux pixels y correspondant de la première image I1, et les autres pixels de l'arrangement peuvent recevoir les signaux d'intensité lumineuse associés aux pixels y correspondant de la seconde image I2, ou des signaux d'intensité lumineuse déterminés par une combinaison des signaux d'intensité lumineuse associés aux pixels des deux images I1, I2. Différents exemples d'arrangements de pixels sont décrits ci-après, notamment en référence aux figures 2 et 3 ; il est à noter que ces exemples ne sont aucunement limitatifs de la présente invention, et que d'autres arrangements de pixels peuvent être envisagés.

La figure 2 présente un schéma illustrant de manière synoptique l'affichage de deux images fusionnées réalisé sur un exemple d'arrangement de pixels, selon un premier mode de réalisation possible de l'invention.

La figure 2 présente un arrangement de quatre pixels P1, P2, P3, P4. Pour chaque arrangement de pixels, il est par exemple possible de réserver à un premier pixel, par exemple au premier pixel P1 de la matrice du dispositif d'affichage, le signal d'intensité lumineuse S11 permettant l'affichage du premier pixel P1 de la première image. Il est possible de réserver également à deux autres pixels, par exemple aux troisième et quatrième pixels P3, P4 de la matrice du dispositif d'affichage, les signaux d'intensité lumineuse S13 et S14 permettant respectivement l'affichage des troisième et quatrième pixels de la première image. Enfin, il est possible de réserver au dernier pixel de l'arrangement, c'est-à-dire par exemple au deuxième pixel P2 de la matrice du dispositif d'affichage, le signal d'intensité lumineuse S22 permettant l'affichage du deuxième pixel P2 de la seconde image. Un tel exemple d'arrangement est particulièrement adapté aux cas où la seconde image est monochrome. Dans cet exemple de réalisation, le deuxième pixel P2, pour chaque arrangement de la matrice du dispositif d'affichage, peut être associé à un filtre coloré.

D'une manière pratique, l'affichage de l'image ainsi fusionnée peut par exemple être mis en oeuvre via les opérations suivantes, réalisées au moyen du contrôleur du dispositif d'affichage :

- une première opération de mapping de la première image sur le dispositif d'affichage, le contrôleur appliquant alors les signaux d'intensité lumineuse S11, S13 et S14 respectivement aux premiers, troisièmes et quatrièmes pixels P1, P3, P4 de tous les arrangements de pixels formant le dispositif d'affichage ;
- une seconde opération de mapping de la seconde image sur le dispositif d'affichage, le contrôleur appliquant alors le signal d'intensité lumineuse S22 aux deuxièmes pixels P2 de tous les arrangements de pixels formant le dispositif d'affichage. Il est à observer ici que le mapping de la seconde image I2 sur le dispositif d'affichage, se réalise sur une définition correspondant au nombre de pixels destinés à l'affichage de la seconde image I2 ; c'est-à-dire, dans le cas de l'exemple ici décrit, les pixels P2 étant attribués à l'affichage de l'image I2, sur un quart de la définition de la matrice du dispositif d'affichage.

La figure 3 présente un schéma illustrant de manière synoptique l'affichage de deux images fusionnées réalisé sur un exemple d'arrangement de pixels, selon un deuxième mode de réalisation possible de l'invention.

La figure 3 présente un arrangement de quatre pixels P1, P2, P3, P4. Pour chaque arrangement de pixels, il est par exemple possible de réserver à un premier pixel, par exemple au premier pixel P1 de la matrice du dispositif d'affichage, le signal d'intensité lumineuse S11 permettant l'affichage du premier pixel P1 de la première image. Il est possible de réserver également à un deuxième pixel, par exemple le quatrième pixel P4 de la matrice du dispositif d'affichage, le signal d'intensité lumineuse S14 permettant l'affichage du quatrième pixel de la première image. Enfin, il est possible de réserver aux deux autres pixels, c'est-à-dire par exemple les deuxième et troisième pixels P2, P3 de la matrice du dispositif d'affichage, les signaux destinés aux pixels y correspondant de l'arrangement considéré de la seconde image, soit respectivement les signaux d'intensité lumineuse S22 et S23. Un tel exemple d'arrangement est particulièrement adapté aux cas où la seconde image est bicolore. Par exemple, des filtres colorés peuvent être affectés aux deuxièmes et troisièmes pixels P2, P3 de tous les arrangements de pixels de la matrice du dispositif d'affichage.

Avantageusement, les filtres colorés associés aux deuxièmes et troisièmes pixels P2, P3 peuvent être de couleurs qui en combinaison permettent la restitution visuelle de la couleur associée au premier pixel P1. Par exemple, les filtres colorés associés aux deuxièmes et troisièmes pixels P2, P3 peuvent être de deux couleurs complémentaires, de manière à ce que par addition, ceux-ci puissent restituer la couleur blanche. Les filtres colorés associés aux deuxièmes pixels P2 des arrangements formant la matrice du dispositif d'affichage peuvent par exemple être de couleur rouge, et les filtres associés aux troisièmes pixels P3 peuvent par exemple être de couleur cyan.

D'une manière pratique, l'affichage de l'image ainsi fusionnée peut par exemple être mis en oeuvre via les opérations suivantes, réalisées au moyen du contrôleur du dispositif d'affichage :

- une première opération de mapping de la première image sur le dispositif d'affichage, le contrôleur appliquant alors les signaux d'intensité lumineuse S11 et S14 respectivement aux premiers et quatrièmes pixels P1 et P4 de tous les arrangements de pixels formant le dispositif d'affichage ;
- une seconde opération de mapping de la seconde image sur le dispositif d'affichage, le contrôleur appliquant alors les signaux d'intensité lumineuse S22 et S23 respectivement aux deuxièmes et troisièmes pixels P2 et P3 de tous les arrangements de pixels formant le dispositif d'affichage. La seconde image étant constituée de deux couleurs, le mapping peut consister dans le mapping de la première couleur sur la sous-matrice constituée des deuxièmes pixels P2, c'est à dire sur une résolution correspondant à un quart de la résolution de la matrice du dispositif d'affichage, et dans le mapping de la seconde couleur sur la sous-matrice constituée des troisièmes pixels P3, c'est à dire sur une résolution correspondant également à un quart de la résolution de la matrice du dispositif d'affichage.

Avantageusement, pour les pixels de la seconde image pour lesquels les signaux d'intensité lumineuse S22 et S23 respectivement aux deuxièmes et troisièmes pixels P2 et P3 sont en dessous d'une valeur de seuil déterminée, c'est-à-dire où la seconde image n'est pas ou très peu visible, la deuxième opération peut être substituée par une opération alternative. Cette opération alternative peut consister à appliquer aux deuxième et troisième pixels de la matrice du dispositif d'affichage, par exemple pour les pixels de la matrice du dispositif d'affichage correspondant à des pixels de la seconde image destinés à être affichés avec un signal dont l'intensité lumineuse se situe en dessous du seuil, des signaux d'intensité lumineuse par exemple déterminés par le contrôleur, correspondant à une combinaison des valeurs des signaux d'intensité lumineuse S12 et S13 de la première image. Par exemple, il est possible d'appliquer aux pixels P2 et P3 respectivement les signaux S2 et S3 dont les valeurs sont définies par les relations suivantes :

$$S2 = a*(S12+S13)/2$$

$$S3 = b*(S12+S13)/2$$

a et b étant des paramètres réels dont la somme égale 2.

Avantageusement, les paramètres a et b peuvent être choisis de façon a générer par la combinaison de la lumière des pixels P2 et P3, la même couleur que celles des pixels P1 et P4. Il est bien sûr possible d'envisager l'application de formules plus complexes pour la combinaison des deux signaux S2 et S3, celles-ci pouvant être des relations linéaires ou non-linéaires.

Ceci peut s'avérer particulièrement avantageux lorsque la partie utile de la seconde image ne couvre qu'une partie la surface de celle-ci, notamment dans les cas où la seconde image représente un symbole ou encore des informations textuelles.

Avantageusement encore, des moyens de renforcement du contraste de l'image fusionnée peuvent être mis en oeuvre, par exemple au moyen du contrôleur du dispositif d'affichage.

En effet, la couleur ou les couleurs de la seconde image peuvent ne paraître vives que sur les parties de l'image fusionnées pour lesquelles le fond de la première image est relativement sombre. Sur les parties plus claires de la première image, la couleur des pixels de la matrice du dispositif d'affichage portant les informations relatives à la seconde image, c'est-à-dire le deuxième pixel P2 dans le cas du premier exemple précité et illustré par la figure 2, ou les deuxième et troisième pixels P2 et P3 dans le cas du deuxième exemple précité et illustré par la figure 3, peut apparaître peu saturé, c'est-à-dire s'apparenter visuellement à une couleur pastelle. Les moyens de renforcement du contraste de l'image fusionnée peuvent permettre d'obtenir une bonne saturation des couleurs de la seconde image tout en gardant un maximum de surface d'affichage pour la première image.

Ainsi, les moyens de renforcement du contraste peuvent être configurés de manière à corriger l'affichage de la première image de la manière suivante, donnée à titre d'exemple non limitatif de la présente invention :

- dans le cas du premier exemple précité, pour les seconds pixels P2 pour lesquels le signal d'intensité lumineuse est différent du signal d'intensité lumineuse correspondant à un niveau de noir, ou bien pour lesquels la valeur quantifiée est supérieure à une valeur de seuil prédéterminée, il est possible de déterminer les valeurs quantifiées des signaux d'intensité lumineuse S1, S3 et S4 à appliquer respectivement aux premiers, troisièmes et quatrièmes pixels des arrangements, par exemple selon la relation suivante :

$$S_i = b.exp(-a.S1_i).S1_i, \text{ pour } i = 1 ; 3 ; 4 \qquad (1) ;$$

- dans le cas du deuxième exemple précité, pour les seconds et troisièmes pixels P2 et P3 pour lesquels le signal d'intensité lumineuse est différent du signal d'intensité lumineuse correspondant à un niveau de noir, ou bien pour lesquels la valeur quantifiée est supérieure à une valeur de seuil prédéterminée, il est possible de déterminer les valeurs quantifiées des signaux d'intensité lumineuse S1 et S4 à appliquer respectivement aux premiers et quatrièmes pixels des arrangements, par exemple selon la relation suivante :

$$S_i = b.exp(-a.S1_i).S1_i, \text{ pour } i = 1 ; 4 \qquad (2).$$

a et b dans les relations (1) et (2) ci-dessus sont des paramètres pouvant être définis et fixés au moyen du contrôleur selon les applications visées, ou bien encore des paramètres modifiables par un utilisateur, par exemple via des moyens de commande externes pouvant permettre une modification de la configuration du contrôleur.

Il est à observer que d'autres fonctions peuvent être appliquées pour la détermination des valeurs des signaux à appliquer, étant ici à retenir que la fonction appliquée doit permettre une atténuation des niveaux clairs de la première image, sans pour autant atténuer les niveaux les plus sombres.

En pratique, un dispositif d'affichage selon l'un des modes de réalisation décrits précédemment peut par exemple se fonder sur un dispositif d'affichage matriciel associé à un contrôleur, le contrôleur pouvant par exemple être intégré à la matrice, ou bien externe à celle-ci.

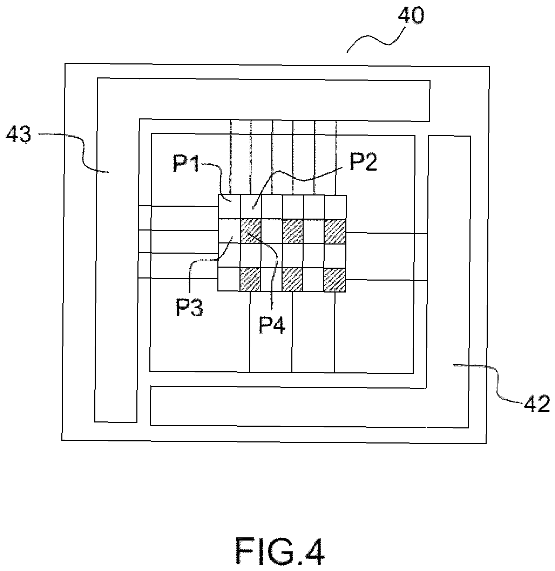

Il est également possible, dans un mode de réalisation avantageux, que le dispositif d'affichage se fonde sur une architecture matérielle dédiée, offrant notamment un avantage en terme de consommation plus réduite en fonctionnement. Un exemple d'architecture matérielle peut se fonder sur une matrice de pixels associée à deux contrôleurs, telle que décrite ci-après en référence à la figure 4, illustrant un exemple de réalisation d'un dispositif d'affichage matriciel selon un mode de réalisation de l'invention.

Un dispositif d'affichage matriciel 40 peut par exemple comprendre une mosaïque d'une pluralité d'arrangements de quatre pixels P1, P2, P3, P4. Le dispositif d'affichage matriciel 40 est ainsi particulièrement adapté au premier mode de réalisation décrit précédemment en référence à la figure 2.

Un premier contrôleur 41, par exemple intégré à la structure contenant la matrice, peut s'interfacer, via des lignes de connexion physiques, avec trois pixels de chaque arrangement : les pixels P1, P2, P3 dans l'exemple illustré par la figure.

Un second contrôleur 42, par exemple également intégré à la structure contenant la matrice, peut s'interfacer, via des lignes de connexion physiques, avec le pixel restant de chaque arrangement : le pixel P4 dans l'exemple illustré par la figure.

De la sorte, un flux vidéo destiné à un affichage sur le dispositif d'affichage matriciel 40 peut être affiché de manière entrelacée, sous la forme d'un premier flux vidéo généré par le premier contrôleur 41, et d'un second flux vidéo généré par le second contrôleur 42. Dans une telle configuration, chaque pixel est formé par un ou plusieurs pixels (trois dans l'exemple illustré par la figure) pilotés par le premier contrôleur 41, et un ou plusieurs pixels (un dans l'exemple de la figure) étant pilotés par le second contrôleur 42. D'une manière générale, les pixels dédiés respectivement à l'affichage de la première et de la seconde image peuvent être conçus de manière à émettre des couleurs différentes, en étant par exemple associés à des filtres de couleurs dédiés. Par exemple, les pixels dédiés à l'affichage de la première image peuvent être conçus de manière à émettre une unique première couleur, les pixels dédiés à l'affichage de la seconde image étant conçus de manière à émettre une unique seconde couleur, différente de la première couleur.

Dans un exemple d'application typique, l'image affichée peut avoir une définition de 800x500 pixels, la première image étant par exemple d'une définition identique et illustrant de manière monochrome le domaine visible, et la seconde image étant par exemple de définition quatre fois moindre, c'est-à-dire de 400x250 pixels, et illustrant par exemple le domaine infrarouge. Dans cette configuration typique et selon l'exemple illustré par la figure, les pixels P4 des arrangements formant la matrice sont par exemple associés à un filtre de couleur rouge.

Un autre avantage procuré par un tel dispositif est que les deux flux vidéo générés par chacun des deux contrôleurs 41, 42 peuvent avoir des définitions différentes. De la même manière, les deux flux vidéo peuvent avoir des fréquences de rafraîchissement différentes. De la sorte, la consommation globale du dispositif d'affichage matriciel 40 est minimisée.

Des exemples pratiques de réalisation de la présente invention sont décrits ci-après.

Selon un premier exemple, l'image affichée par le dispositif d'affichage matriciel peut combiner une première image provenant d'un capteur de vision nocturne avec une seconde image graphique, par exemple générée par un microcontrôleur ou un micro-ordinateur. La première image peut par exemple être une image monochrome, d'une définition de 2000x2000 pixels, la couleur affichée étant par exemple le blanc ou une première couleur C1. La seconde image peut consister en des informations graphiques (par exemple des icônes, curseurs, menus, ...) ou textuelles (informations de position, d'heure, etc.), la couleur affichée étant par exemple le rouge, ou bien une seconde couleur C2 différente de la première couleur C1.

Dans ce premier exemple, le dispositif d'affichage matriciel peut comprendre un contrôleur vidéo, par exemple de type FPGA, une interface vidéo avec le capteur de vision nocturne, une interface vidéo avec le microcontrôleur ou micro-ordinateur pour l'affichage de la seconde image, une interface de sortie avec la matrice de pixels, cette dernière formant un panneau d'affichage dédié comprenant des arrangements de quatre pixels en carrés. La définition de la matrice de pixels peut alors être de 2000x2000 pixels, les arrangements de quatre pixels P1 à P4 étant composés de trois pixels P1, P3 et P4 émettant dans la couleur blanche ou dans la première couleur C1, le pixel restant P2 émettant dans la couleur rouge ou dans la seconde couleur C2.

La matrice de pixels peut être formée par un micro-écran de type OLED à matrice active à émetteurs blancs (ou de la première couleur C1), un filtre coloré rouge (ou de la seconde couleur C2) étant associé aux pixels destinés à l'affichage de la seconde image, ou bien ces pixels étant associés à des émetteurs de rouge ou de la seconde couleur C2.

Selon ce premier exemple, l'affichage combiné des deux images peut alors consister en un affichage de la première image sur la matrice de 2000x2000 pixels en omettant un pixel sur quatre (les pixels P2). En désignant S11, S12, S13 et S14 les signaux d'intensité correspondant à la première image à appliquer respectivement aux pixels P1, P2, P3, P4, on applique S11 sur le pixel P1, S13 sur le pixel P3 et S14 sur le pixel P4. La seconde image peut alors être affichée sur les pixels restants P2, en appliquant le signal S22 (signal d'intensité correspondant à la seconde image).

En fonction de l'intensité de la première image, la seconde image peut paraître plus ou moins saturée. Dans ce premier exemple, le rouge de la seconde image peut paraître rose devant un fond (c'est-à-dire la première image) clair. Pour compenser ce phénomène, une correction locale de l'intensité de la première image peut être réalisée, autour des zones d'affichage de la seconde image, c'est-à-dire aux endroits où l'intensité de la seconde image est différente de zéro, ou bien est au-dessus d'un seuil déterminé. Ainsi que cela est décrit précédemment, afin de ne pas trop dégrader la saturation de couleur, les signaux S11, S13 et S14 peuvent être atténués de sorte que l'atténuation soit maximale si l'intensité est forte (fond blanc), et négligeable lorsque l'intensité est faible (fond sombre), par exemple :

si S22 > valeur de seuil déterminée, alors :

$$S1i(corr) = \exp(-a*S1i)*S1i, \quad i=1, 3, 4 \,,$$

a étant un paramètre à déterminer selon l'application. Par exemple, si l'image 2 contient des symboles, une valeur de a comprise entre 0,002 et 0,006 fournit des résultats satisfaisants. Ainsi, la couleur de la première image demeure assez saturée, alors que la seconde image demeure transparente ; en d'autres termes il est encore possible de bien distinguer les détails de la première image en arrière des symboles de la seconde image.

Selon un deuxième exemple, l'image affichée par le dispositif d'affichage matriciel peut combiner une première image provenant d'un capteur de vision nocturne avec une seconde image issue d'un capteur infrarouge visant la même scène. La première image peut par exemple être une image monochrome, d'une définition de 2000x2000 pixels, la couleur affichée étant par exemple le blanc ou une première couleur C1. La seconde image peut être également monochrome, de résolution moindre : par exemple 480x480 pixels, la couleur affichée étant par exemple le rouge, ou bien une seconde couleur C2 différente de la première couleur C1.

Dans ce deuxième exemple, le dispositif d'affichage matriciel peut comprendre un contrôleur vidéo, par exemple de type FPGA, une première interface vidéo avec le capteur de vision nocturne, une seconde interface vidéo avec le capteur infrarouge, une unité de traitement d'image permettant de réaliser le mapping de la seconde image, c'est-à-dire l'adaptation de la définition de celle-ci, dictée par le capteur infrarouge, à la résolution de la matrice de pixels réservée à l'affichage de la seconde image (par exemple 1000x1000 pixels si un pixel sur quatre est utilisé à cet effet, ainsi que cela est explicité ci-après), une interface de sortie avec la matrice de pixels, cette dernière formant un panneau d'affichage dédié comprenant des arrangements de quatre pixels en carrés. La définition de la matrice de pixels peut alors, à l'instar du premier exemple décrit précédemment, être de 2000x2000 pixels, les arrangements de quatre pixels P1 à P4 étant composés de trois pixels P1, P3 et P4 émettant dans la couleur blanche ou dans la première couleur C1, le pixel restant P2 émettant dans la couleur rouge ou dans la seconde couleur C2.

La matrice de pixels peut également être formée par un micro-écran de type OLED à matrice active à émetteurs blancs (ou de la première couleur C1), un filtre coloré rouge (ou de la seconde couleur C2) étant associé aux pixels destinés à l'affichage de la seconde image, ou bien ces pixels étant associés à des émetteurs de rouge ou de la seconde couleur C2.

L'affichage combiné des deux images peut être réalisé d'une manière similaire au premier exemple décrit précédemment. Afin de conférer une bonne visibilité des deux image, il est important dans ce deuxième exemple d'appliquer la correction d'intensité à la première image à partir d'un certain seuil d'intensité de la seconde image seulement, et d'adapter le paramètre a de manière appropriée.

Il est à noter que tous les modes de réalisation décrits ci-dessus s'appliquent à l'affichage combiné de deux images. Toutefois, un disositif d'affichage matriciel selon la présente invention peut également afficher une pluralité d'images combinées, avec des arrangements de pixels dans lesquels des pixels sont dédiés à différentes images parmi la pluralité d'images.

Ainsi, selon un troisième exemple, d'une manière similaire au deuxième exemple décrit précédemment, l'image affichée par le dispositif d'affichage matriciel peut combiner une première image provenant d'un capteur de vision nocturne avec une deuxième image issue d'un capteur infrarouge visant la même scène, mais également avec une troisième image, par exemple générée par un microcontrôleur ou un micro-ordinateur, à l'instar de la seconde image dans le premier exemple décrit précédemment. La première image peut par exemple être une image monochrome, d'une définition de 2000x2000 pixels, la couleur affichée étant par exemple le blanc ou une première couleur C1. La deuxième image peut être également monochrome, de résolution moindre : par exemple 480x480 pixels, la couleur affichée étant par exemple le rouge, ou bien une deuxième couleur C2 différente de la première couleur C1. La troisième image peut consister en des informations graphiques (par exemple des icônes, curseurs, menus, ...) ou textuelles (informations de position, d'heure, etc.), la couleur affichée étant par exemple le cyan, ou bien une troisième couleur C3 différente de la première couleur C1 et de la deuxième couleur C2.

Dans ce troisième exemple, le dispositif d'affichage matriciel peut comprendre un contrôleur vidéo, par exemple de type FPGA, une première interface vidéo avec le capteur de vision nocturne, une deuxième interface vidéo avec le capteur infrarouge, une troisième interface vidéo avec le microcontrôleur ou micro-ordinateur pour l'affichage de la seconde image, une unité de traitement d'image permettant de réaliser le mapping de la seconde image à l'instar du deuxième exemple décrit précédemment, une interface de sortie avec la matrice de pixels, cette dernière formant un panneau d'affichage dédié comprenant des arrangements de quatre pixels en carrés. La définition de la matrice de pixels peut alors être de 2000x2000 pixels, les arrangements de quatre pixels P1 à P4 étant composés de deux pixels P1 et P4 émettant dans la couleur blanche ou dans la première couleur C1, le pixel P2 étant dédié à l'affichage de la deuxième image et émettant dans la couleur rouge ou dans la deuxième couleur C2, et le pixel P3 émettant dans la couleur cyan ou dans la troisième couleur C3, et étant dédié à l'affichage de la troisième image.

La matrice de pixels peut être formée par un micro-écran de type OLED à matrice active à émetteurs blancs (ou de la première couleur C1), un filtre coloré rouge (ou de la deuxième couleur C2) étant associé aux pixels destinés à l'affichage de la deuxième image, ou bien ces pixels étant associés à des émetteurs de rouge ou de la deuxième couleur C2, un filtre coloré cyan (ou de la troisième couleur C3) étant associé aux pixels destinés à l'affichage de la troisième image, ou bien ces pixels étant associés à des émetteurs de cyan ou de la troisième couleur C3.

Selon ce troisième exemple, l'affichage combiné des trois images peut alors consister en un affichage de la première image sur la matrice de 2000x2000 pixels en omettant deux pixels sur quatre (les pixels P2 et P3). En désignant S11, S12, S13 et S14 les signaux d'intensité correspondant à la première image à appliquer respectivement aux pixels P1, P2, P3, P4, on applique S11 sur le pixel P1 et S14 sur le pixel P4. La deuxième image peut alors être affichée sur les pixels P2, en appliquant le signal S22 (signal d'intensité correspondant à la seconde image), et la troisième image peut être affichée sur les pixels P3, en appliquant le signal S33.

En fonction de l'intensité de la première image, la deuxième et la troisième images peuvent paraître plus ou moins saturées. Ainsi, le rouge de la deuxième image peut paraître rose devant un fond (c'est-à-dire la première image) clair. Pour compenser ce phénomène, une correction locale de l'intensité de la première image peut être réalisée, autour des zones d'affichage de la deuxième et de la troisième images, c'est-à-dire aux endroits où l'intensité de la deuxième ou de la troisième image est différente de zéro, ou bien est au-dessus d'un seuil déterminé. Les signaux S11 et S14 peuvent être ainsi atténués de sorte que l'atténuation soit maximale si l'intensité est forte (fond blanc), et négligeable lorsque l'intensité est faible (fond sombre), par exemple :

si S22 > première valeur de seuil déterminée OU S33 > seconde valeur de seuil déterminée, alors :

$$S1i(corr) = exp(-a*S1i)*S1i, i=1, 4,$$

a étant un paramètre à déterminer selon l'application. Par exemple, si l'image 2 contient des symboles, une valeur de a comprise entre 0,002 et 0,004 fournit des résultats satisfaisants. Ainsi, la couleur de la première image demeure assez saturée, alors que les deuxième et troisième images demeurent transparentes.

Afin d'améliorer encore le rendement de la première image, il est possible, ainsi que cela est décrit précédemment, d'utiliser les pixels P2 et P3 pour l'affichage de la première image aux endroits de celle-ci où aucun sur-affichage (ou « overlay ») de la deuxième ou de la troisième image n'est présent, ou bien aux endroits de la première image où l'intensité des overlays reste en dessous d'un seuil déterminé. En ayant choisi des couleurs complémentaires pour les pixels P2 et P3 des arrangements, c'est-à-dire que leur superposition génère la couleur blanche, une combinaison de P2 et P3 peut substituer un pixel blanc. Il est alors possible d'afficher sur les pixels P2 et P3 les signaux suivants :

si S22 < troisième valeur seuil ET S33 < quatrième valeur de seuil, alors :

$$S2 = (S12+S13)/2$$

$$S3 = (S12+S13)/2$$

De la sorte, il est possible de profiter d'un maximum de résolution pour la première image.

## Revendications

1. Système comprenant une première et une seconde source d'images et un dispositif d'affichage matriciel (100) de définition déterminée d'une pluralité de pixels, le dispositif d'affichage matriciel (100) comprenant :

   · au moins un contrôleur configuré pour recevoir une première et une seconde image depuis la première et la seconde source d'images, respectivement, la seconde source étant distincte de la première source, et pour produire des signaux d'intensité lumineuse d'affichage pour chacun des pixels,
   · une matrice de pixels organisés en une mosaïque d'une pluralité d'arrangements identiques d'un nombre déterminé de pixels où un premier nombre de pixels de chaque arrangement est dédié à l'affichage de la première image (I1) issue de la première source et est configuré pour recevoir des signaux d'intensité lumineuse associés aux pixels y correspondant de la première image (I1), les autres pixels de l'arrangement étant dédiés à l'affichage de la seconde image (I2) issue de la seconde source et étant configurés pour recevoir des signaux d'intensité lumineuse associés aux pixels y correspondant de ladite seconde image (I2),

      - les pixels dédiés à l'affichage de la première image (I1) émettant une première unique couleur et les pixels dédiés à l'affichage de la seconde image (I2) émettant une seconde unique couleur différente de la première couleur,
      - le dispositif d'affichage matriciel réalisant l'affichage fusionné de la première image (I1) et de la seconde image (I2), les deux images (I1, I2) étant si besoin redimensionnées par des moyens de mise à l'échelle ; où
      - chacun desdits arrangements est formé par un carré de quatre pixels (P1, P2, P3, P4), deux pixels de chaque arrangement étant associés aux signaux d'intensité lumineuse (S11,S14) destinés aux pixels correspondants de la première image (I1), et les deux pixels restants (P2, P3) étant associés aux signaux d'intensité lumineuse (S22,S23) destinés aux pixels correspondants de la seconde image (I2) ;

   **caractérisé en ce que** le contrôleur est configuré pour appliquer auxdits deux pixels (P1, P4) des arrangements pour lesquels lesdits pixels restants (P2, P3) ont une valeur quantifiée des signaux d'intensité lumineuse supérieure à une valeur de seuil prédéterminée, une fonction d'atténuation atténuant lesdits signaux d'intensité lumineuse (S11, S14) de la première image afin de déterminer respectivement deux valeurs quantifiées des signaux d'intensité lumineuse (S1,S4) à appliquer respectivement auxdits deux pixels (P1, P4).

2. Système comprenant une première et une seconde source d'images et un dispositif d'affichage matriciel (100) de définition déterminée d'une pluralité de pixels, le dispositif d'affichage matriciel (100) comprenant :

   · au moins un contrôleur configuré pour recevoir une première et une seconde image depuis la première et la seconde source d'images, respectivement, la seconde source étant distincte de la première source, et pour produire des signaux d'intensité lumineuse d'affichage pour chacun des pixels,
   · une matrice de pixels organisés en une mosaïque d'une pluralité d'arrangements identiques d'un nombre déterminé de pixels où un premier nombre de pixels de chaque arrangement est dédié à l'affichage de la première image (I1) issue de la première source et est configuré pour recevoir des signaux d'intensité lumineuse associés aux pixels y correspondant de la première image (I1), les autres pixels de l'arrangement étant dédiés à l'affichage de la seconde image (I2) issue de la seconde source et étant configurés pour recevoir des signaux d'intensité lumineuse associés aux pixels y correspondant de ladite seconde image (I2),
      - les pixels dédiés à l'affichage de la première image (I1) émettant une première unique couleur et les pixels dédiés à l'affichage de la seconde image (I2) émettant une seconde unique couleur différente de la première couleur,
      - le système d'affichage matriciel réalisant l'affichage fusionné de la première image (I1) et de la seconde image (I2), les deux images (I1, I2) étant si besoin redimensionnées par des moyens de mise à l'échelle ;
      - **caractérisé en ce que** chacun desdits arrangements est formé par un carré de quatre pixels (P1, P2, P3, P4), trois pixels (P1, P3, P4) de chaque arrangement étant associés aux signaux d'intensité lumineuse (S11,S13,S14) destinés aux pixels correspondants de la première image (I1), et le pixel restant (P2) étant associé au signal d'intensité lumineuse (S22) destiné au pixel correspondant de la seconde image (I2) ; et **en ce que** le contrôleur est configuré pour appliquer auxdits trois pixels (P1, P3, P4) des arrangements pour lesquels ledit pixel restant (P2) a une valeur quantifiée du signal d'intensité lumineuse supérieure à une valeur de seuil prédéterminée, une fonction d'atténuation atténuant lesdits signaux d'intensité lumineuse (S11, S13, S14) de la première image afin de déterminer respectivement trois valeurs quantifiées des signaux d'intensité lumineuse (S1, S3, S4) à appliquer respectivement auxdits trois pixels (P1, P3, P4).

**3.** Système selon la revendication 1, **caractérisé en ce que** la fonction d'atténuation détermine lesdites deux valeurs quantifiées des signaux d'intensité lumineuse (S1, S4) à appliquer respectivement auxdits deux pixels, suivant la relation suivante :

Si = b.exp(-a.S1i).S1i, pour i = 1 ; 4, S1 et S4 étant lesdits deux valeurs quantifiées des signaux d'intensité lumineuse à appliquer, S11 et S14 étant lesdits signaux d'intensité lumineuse de la première image et a et b étant des paramètres réels.

**4.** Système selon la revendication 2 **caractérisé en ce que** la fonction d'atténuation détermine lesdites trois valeurs quantifiées des signaux d'intensité lumineuse (S1, S3, S4) à appliquer respectivement auxdits trois pixels, suivant la relation suivante :

Si = b.exp(-a.S1i).S1i, pour i = 1 ; 3 ; 4, S1,S3 et S4 étant lesdits trois valeurs quantifiées des signaux d'intensité lumineuse à appliquer, S11,S13 et S14 étant lesdits signaux d'intensité lumineuse de la première image et a et b étant des paramètres réels.

**5.** Système selon l'une quelconque des revendications précédentes, **caractérisé en ce qu'**il comprend un premier contrôleur (41) s'interfaçant avec ledit premier nombre de pixels de chaque arrangement et correspondant à la première image (I1), et un second contrôleur (42) s'interfaçant avec les autres pixels de chaque arrangement et correspondant à ladite seconde image (I2).

**6.** Système selon l'une quelconque des revendications précédentes, **caractérisé en ce que** la première source d'images est choisie parmi un capteur de vision nocturne, un capteur infrarouge ou un capteur d'imagerie par rayons X, et la seconde source d'images, essentiellement monochrome, est choisie parmi un capteur infrarouge, un capteur d'échographie, ou une source d'images monochromes ou bi-couleur de symbologie.

**Patentansprüche**

**1.** System, umfassend eine erste und zweite Bildquelle und eine Matrix-Anzeigevorrichtung (100) einer bestimmten Definition einer Vielzahl von Pixeln, wobei die Matrix-Anzeigevorrichtung (100) umfasst:

. wenigstens einen Controller, der konfiguriert ist, um jeweils ein erstes und ein zweites Bild ausgehend von der ersten und der zweiten Bildquelle zu empfangen, wobei die zweite Quelle von der ersten Quelle unterschiedlich ist, und um Anzeige-Leuchtintensitätssignale für jedes der Pixel zu produzieren,
. eine Pixelmatrix, die in einem Mosaik einer Vielzahl von einer bestimmten Anzahl von Pixeln identischen Anordnungen organisiert ist,
wobei eine erste Anzahl von Pixeln jeder Anordnung der Anzeige des aus der ersten Quelle stammenden ersten Bildes (I1) dediziert ist und konfiguriert ist, um den Pixeln zugeordnete, ihnen entsprechende Leuchtintensitätssignale des ersten Bildes (I1) zu empfangen, wobei die anderen Pixel der Anordnung der Anzeige des aus der zweiten Quelle stammenden zweiten Bildes (I2) dediziert sind und konfiguriert sind, um den Pixeln zugeordnete, ihnen entsprechende Leuchtintensitätssignale des genannten zweiten Bildes (12) zu empfangen,

- wobei die der Anzeige des ersten Bildes (I1) dedizierten Pixel eine erste einzigartige Farbe ausgeben und die der Anzeige des zweiten Bildes ((I2) dedizierten Pixel eine einzigartige, von der ersten Farbe unterschiedliche zweite Farbe ausgeben,
- wobei die Matrix-Anzeigevorrichtung die verschmolzene Anzeige des ersten Bildes (I1) und des zweiten Bildes (I2) realisieren, wobei die zwei Bilder (I1, I2), falls erforderlich, von Normierungsmitteln neu dimensioniert werden; wobei
- jede der genannten Anordnungen durch ein Quadrat aus vier Pixeln (P1, P2, P3, P4) geformt ist, wobei zwei Pixel jeder Anordnung den Leuchtintensitätssignalen (S11, S14) zugeordnet sind, die für die dem ersten Bild (I1) entsprechenden Pixel bestimmt sind und die zwei verbleibenden Pixel (P2, P3) den Leuchtintensitätssignalen (S22, S23) zugeordnet sind, die für die dem zweiten Bild (I2) entsprechenden Pixel bestimmt sind;

**dadurch gekennzeichnet, dass** der Controller konfiguriert ist, um auf die genannten zwei Pixel (P1, P4) Anordnungen anzuwenden, für die die genannten verbleibenden Pixel (P2, P3) einen einen vorbestimmten Schwellenwert übersteigenden quantifizierten Wert der Leuchtintensitätssignale haben, wobei eine Abschwächungsfunktion die genannten Leuchtintensitätssignale (S11, S14) des ersten Bildes abschwächen, um jeweils zwei quantifizierte Werte der Leuchtintensitätssignale (S1, S4) zu bestimmen, die jeweils auf die genannten zwei Pixel (P1, P4) anzuwenden sind.

2. System, umfassend eine erste und eine zweite Bildquelle und eine Matrix-Anzeigevorrichtung (100) mit einer bestimmten Definition einer Vielzahl von Pixeln, wobei die Matrix-Anzeigevorrichtung (100) umfasst:

. wenigstens einen Controller, der konfiguriert ist, um jeweils ein erstes und ein zweites Bild ausgehend von der ersten und der zweiten Bildquelle zu empfangen, wobei die zweite Quelle von der ersten Quelle unterschiedlich ist, und um Anzeige-Leuchtintensitätssignale für jedes der Pixel zu produzieren,

. eine Pixelmatrix, die in einem Mosaik einer Vielzahl von einer bestimmten Anzahl von Pixeln identischen Anordnungen organisiert sind, wobei eine erste Anzahl von Pixeln jeder Anordnung der Anzeige des aus der ersten Quelle stammenden ersten Bildes (I1) dediziert ist und konfiguriert ist, um den Pixeln zugeordnete, ihnen entsprechende Leuchtintensitätssignale des ersten Bildes (I1) zu empfangen, wobei die anderen Pixel der Anordnung der Anzeige des aus der zweiten Quelle stammenden zweiten Bildes (I2) dediziert sind und konfiguriert sind, um den Pixeln zugeordnete, ihnen entsprechende Leuchtintensitätssignale des genannten zweiten Bildes (I2) zu empfangen,

- wobei die der Anzeige des ersten Bildes (I1) dedizierten Pixel eine erste einzigartige Farbe ausgeben und die der Anzeige des zweiten Bildes (12) dedizierten Pixel eine einzigartige, von der ersten Farbe unterschiedliche zweite Farbe ausgeben,

- wobei die Matrix-Anzeigevorrichtung die verschmolzene Anzeige des ersten Bildes (I1) und des zweiten Bildes (I2) realisieren, wobei die zwei Bilder (I1, I2), falls erforderlich, von Normierungsmitteln neu dimensioniert werden;

- **dadurch gekennzeichnet, dass** jede der genannten Anordnungen durch ein Quadrat aus vier Pixeln (P1, P2, P3, P4) geformt ist, wobei drei Pixel (P1, P3, P4) jeder Anordnung den Leuchtintensitätssignalen (S11, S13, S 14) zugeordnet sind, die für die dem ersten Bild (I1) entsprechenden Pixel bestimmt sind und das verbleibende Pixel (P2) dem Leuchtintensitätssignal (S22) zugeordnet ist, das für die dem zweiten Bild (I2) entsprechenden Pixel bestimmt ist;

und dass der Controller konfiguriert ist, um auf die genannten drei Pixel (P1, P3, P4) Anordnungen anzuwenden, für die das genannte verbleibende Pixel (P2) einen einen vorbestimmten Schwellenwert übersteigenden quantifizierten Wert der Leuchtintensitätssignale hat, wobei eine Abschwächungsfunktion die genannten Leuchtintensitätssignale (S11, S13, S14) des ersten Bildes abschwächen, um jeweils drei quantifizierte Werte der Leuchtintensitätssignale (S1, S3, S4) zu bestimmen, die jeweils auf die genannten drei Pixel (P1, P3, P4) anzuwenden sind.

3. System gemäß Anspruch 1, **dadurch gekennzeichnet, dass** die Abschwächungsfunktion die genannten zwei quantifizierten Werte der Leuchtintensitätssignale (S1, S4) bestimmt, die jeweils gemäß dem folgenden Verhältnis auf die genannten zwei Pixel anzuwenden sind.

Wenn = b.exp(-a.S1i),S1i, für i = 1; wobei 4, S1 und S4 die genannten zwei quantifizierten Werte der anzuwendenden Leuchtintensitätssignale sind, wobei S11 und S14 die genannten Leuchtintensitätssignale des ersten Bildes sind und a und b reale Parameter sind.

4. System gemäß Anspruch 2, **dadurch gekennzeichnet, dass** die Abschwächungsfunktion die genannten drei quantifizierten Werte der Leuchtintensitätssignale (S1, S3, S4) bestimmt, die jeweils gemäß dem folgenden Verhältnis auf die genannten drei Pixel anzuwenden sind:

Si = b.exp(-a.S1i).S1i, für i = 1; 3; 4, wobei S1, S3, und S4 die genannten drei quantifizierten Werte der anzuwendenden Leuchtintensitätssignale sind, wobei S11, S 13 und S14 die genannten Leuchtintensitätssignale des ersten Bildes und a und b die realen Parameter sind.

5. System gemäß irgendeinem der voranstehenden Ansprüche, **dadurch gekennzeichnet, dass** es einen ersten Controller (41), der mit der genannten ersten Anzahl von Pixeln jeder Anordnung eine Schnittstelle bildet und die dem ersten Bild (I1) entspricht, und einen zweiten Controller (42), der mit den anderen Pixeln jeder Anordnung eine Schnittstelle bildet und dem genannten zweiten Bild (I2) entspricht, umfasst.

6. System gemäß irgendeinem der voranstehenden Ansprüche, **dadurch gekennzeichnet, dass** die erste Bildquelle aus einem Nachtsichtsensor, einem Infrarotsensor oder einem Bildgebungssensor per Röntgenstrahlen ausgewählt ist und die im Wesentlichen einfarbige zweite Bildquelle aus einem Infrarotsensor, einem Echographiesensor oder einer einfarbigen oder zweifarbigen Symbologie-Bildquelle ausgewählt ist.

**Claims**

1. A system comprising a first and a second source of images and a matrix display device (100) with a definition determined by a plurality of pixels, the matrix display device (100) comprising:

    . at least one controller configured to receive a first and a second image from the first and the second source of images respectively, the second source being distinct from the first source, and to produce display light intensity signals for each of the pixels,
    . a matrix of pixels organised in a mosaic of a plurality of identical arrangements of a predetermined number of pixels,
    wherein a first number of pixels of each arrangement is dedicated to the display of the first image (I1) from the first source and is configured to receive light intensity signals associated with the pixels of the first image (I1) that correspond thereto, the other pixels of the arrangement being dedicated to the display of the second image (I2) from the second source and being configured to receive light intensity signals associated with the pixels of said second image (I2) that correspond thereto,

        - the pixels dedicated to the display of the first image (I1) emitting a first single colour and the pixels dedicated to the display of the second image (I2) emitting a second single colour different from the first colour,
        - the matrix display device producing the merged display of the first image (I1) and of the second image (I2), the two images (I1, I2), if necessary, being re-dimensioned by scaling means; wherein
        - each of said arrangements is formed by a square of four pixels (P1, P2, P3, P4), two pixels of each arrangement being associated with the light intensity signals (S11, S14) intended for the corresponding pixels of the first image (I1), and the two remaining pixels (P2, P3) being associated with the light intensity signals (S22, S23) intended for the corresponding pixels of the second image (I2);
        **characterised in that** the controller is configured to apply to said two pixels (P1, P4) of the arrangements for which said remaining pixels (P2, P3) have a quantified light intensity signal value greater than a predetermined threshold value, an attenuation function attenuating said light intensity signals (S11, S14) of the first image in order to determine respectively two quantified values of the light intensity signals (S1, S4) to be applied respectively to said two pixels (P1, P4).

2. A system comprising a first and a second source of images and a matrix display device (100) with a definition determined by a plurality of pixels, the matrix display device (100) comprising:

    . at least one controller configured to receive a first and a second image from the first and the second source of images respectively, the second source being distinct from the first source, and to produce display light intensity signals for each of the pixels,
    . a matrix of pixels organised in a mosaic of a plurality of identical arrangements of a predetermined number of pixels, wherein a first number of pixels of each arrangement is dedicated to the display of the first image (I1) from the first source and is configured to receive light intensity signals associated with the pixels of the first image (I1) that correspond thereto, the other pixels of the arrangement being dedicated to the display of the second image (I2) from the second source and being configured to receive light intensity signals associated with the pixels of said second image (I2) that correspond thereto,

        - the pixels dedicated to the display of the first image (I1) emitting a first single colour and the pixels dedicated to the display of the second image (I2) emitting a second single colour different from the first colour,
        - the matrix display system producing the merged display of the first image (I1) and of the second image (I2), the two images (I1, I2), if necessary, being re-dimensioned by scaling means;
        - **characterised in that** each of said arrangements is formed by a square of four pixels (P1, P2, P3, P4), three pixels (P1, P3, P4) of each arrangement being associated with the light intensity signals (S11, S13, S14) intended for the corresponding pixels of the first image (I1), and the remaining pixel (P2) being associated with the light intensity signals (S22) intended for the corresponding pixel of the second image (I2); and **in that** the controller is configured to apply to said three pixels (P1, P3, P4) of the arrangements for which said remaining pixel (P2) has a quantified light intensity signal value greater than a predetermined threshold value, an attenuation function attenuating said light intensity signals (S11, S13, S14) of the first image in order to determine respectively three quantified values of the light intensity signals (S1, S3, S4) to be applied respectively to said three pixels (P1, P3, P4).

3. The system according to Claim 1, **characterised in that** the attenuation function determines said two quantified values of the light intensity signals (S1, S4) to be applied respectively to said two pixels according to the following relationship:

$Si = b.\exp(-a.S1i).S1i$, for i = 1; 4, S1 and S4 being said two quantified values of the light intensity signals to be applied, S11 and S14 being said light intensity signals of the first image and a and b being real parameters.

4. The system according to Claim 2, **characterised in that** the attenuation function determines said three quantified values of the light intensity signals (S1, S3, S4) to be applied respectively to said three pixels according to the following relationship:

$Si = b.\exp(-a.S1i).S1i$, for i = 1; 3; 4, S1, S3 and S4 being said three quantified values of the light intensity signals to be applied, S11, S13 and S14 being said light intensity signals of the first image and a and b being real parameters.

5. The system according to any of the preceding claims, **characterised in that** it comprises a first controller (41) interfacing with said first number of pixels of each arrangement and corresponding to the first image (I1), and a second controller (42) interfacing with the other pixels of each arrangement and corresponding to said second image (I2).

6. The system according to any of the preceding claims, **characterised in that** the first source of images is chosen from a night vision sensor, an infrared sensor or an X-ray imaging sensor, and the second source of images, essentially monochrome, is chosen from an infrared sensor, an echography sensor or a source of monochrome or two-colour symbology images.

FIG.1

S1 = S11

S2 = S22

| | |
|---|---|
| P1 | P2 |
| P3 | P4 |

S3 = S13

S4 = S14

## FIG.2

S1 = S11

S2 = S22

| | |
|---|---|
| P1 | P2 |
| P3 | P4 |

S3 = S23

S4 = S14

## FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007146242 A
- US 2006284872 A